# EUROPÄISCHE PATENTSCHRIFT

(11) **EP 0 964 238 B1**
(45) Veröffentlichungstag und Bekanntmachung des Hinweises auf die Patenterteilung: **21.03.2007**
(21) Anmeldenummer: 99108214.0
(22) Anmeldetag: 27.04.1999
(51) Int. Cl.: G01M 13/00, G01M 7/02, G01M 13/02, G01M 7/00

(54) **Prüfstand für Abgasanlagen einer Brennkraftmaschine**
Test bench for testing exhaust arrangements of a combustion engine
Banc d'essai pour l'épreuve des dispositifs d'émission d'un moteur à combustion

(30) Priorität: 10.06.1998 DE 19825798
(43) Veröffentlichungstag der Anmeldung: 15.12.1999
(73) Patentinhaber: Dr.Ing. h.c.F. Porsche Aktiengesellschaft, 70435 Stuttgart (DE)
(72) Erfinder: Blaich, Reiner, 75365 Calw (DE); Weimert, Günter, 75323 Bad Wildbad (DE); Mechler, Frank, 70195 Stuttgart (DE)

(56) Entgegenhaltungen:
- DE-A- 2 557 674
- DE-A- 3 405 951

## Beschreibung

Die Erfindung bezieht sich auf einen Prüfstand für Abgasanlagen einer Brennkraftmaschine nach dem Oberbegriff des Anspruchs 1.

Aus der DE 34 05 951 C2 ist ein Überprüfungsverfahren der Schwingungsfestigkeit von Abgasanlagen für Brennkraftmaschinen bekannt. Die Abgasanlage wird bei in Betrieb befindlicher Brennkraftmaschine an den festigkeitsmäßig gefährdeten Stellen schwingungstechnisch überprüft. Ferner ist aus der DE 40 19 581 A1 ein Prüfstand zur Geräuschmessung von Kraftfahrzeug-Abgasanlagen bekannt, bei der die Abgasanlage im originalen Einbauzustand am Motor befestigt ist.

Aufgabe der Erfindung ist es, einen Prüfstand für Abgasanlagen von Brennkraftmaschinen zu schaffen, der eine Überprüfung der Abgasanlage im Betrieb in einfacher Weise ermöglicht, ohne daß das Fahrzeug auf der Straße fährt.

Diese Aufgabe wird erfindungsgemäß durch die Merkmale des Anspruchs 1 gelöst. Weitere vorteilhafte Merkmale beinhalten die abhängigen Ansprüche.

Die mit der Erfindung hauptsächlich erzielten Vorteile bestehen darin, daß mit dem Prüfstand in relativ einfacher Weise Original-Abgasanlagen am Motor bzw. am Zylinderkopf oder an Fahrzeugattrappen unter Betriebstemperatur, beispielsweise hinsichtlich ihrer Betriebsfestigkeit geprüft werden können und bei auftretenden Mängeln eine entsprechende Behebung dieser Mängel durch eine Weiterentwicklung erfolgen kann.

Der Prüfstand umfaßt hierzu im wesentlichen eine Heißgasanlage mit mindestens zwei Heißgaserzeugern, wodurch Temperaturen zwischen ca. 300°C und 1000°C gefahren werden können. Desweiteren wird ein Elektropulser verwendet, mit dem Frequenzen zwischen 2Hz und 2kHz und Schwingbewegungen von ca. 12mm ± an der Abgasanlage erzielt werden können.

Damit eine Überprüfung der Abgasanlage, wie im Fahrzeug erzielt wird, ist der Motor mit einbezogen. Dieser weist hierzu in Bohrungen eines Zylinderkopfes angeordnete Verbindungsrohre auf, die an der Einlaßseite des Zylinderkopfes mit einem Saugverteiler verbunden sind, an welche die Heißgasanlage unter Zwischenschaltung eines Kompensators angeschlossen wird. An der Auslaßseite des Zylinderkopfes sind die Verbindungsrohre an die Abgasanlage angeschlossen.

Der zwischengeschaltete Kompensator dient als Verbindungsglied zwischen Heißgaserzeuger und Saugverteiler um die Heißgase von ca. 1000°C praktisch ohne Wärmeverlust weiterzuleiten und die erzielten Schwingwege aufzunehmen, ohne daß der Kompensator durch Wärme und Schwingungen defekt wird.

Der Kompensator ist hierzu in vorteilhafter Weise als Mehrfachrohr mit einem äußeren Wellrohr und innenliegenden Doppelrohren ausgeführt, wobei das eine innere Rohr als Gasführungsrohr und das weitere innere Rohr mit einem Luftspalt beabstandet zur Wärmeisolation zum Gasführungsrohr angeordnet ist. Zur Bewältigung der Schwingwege, sind die inneren Rohre endseitig im Abstand zum Wellrohr bzw. zum Verbindungsflansch angeordnet und zur Aufnahme von Längenausdehnungen mit einem Schiebesitz ausgestattet, wozu auf dem Gasführungsrohr das weitere innere Rohr nur aufgesetzt ist.

Die dem Zylinderkopf des Motors durchdringenden Verbindungsrohre weisen zur Aufnahme von Wärmeausdehnungen ebenfalls einen Schiebesitz auf, der beispielsweise aus zwei ineinandergesteckten Rohren gebildet wird.

Ein Ausführungsbeispiel der Erfindung ist in den Zeichnungen dargestellt und wird im folgenden näher beschrieben.

Es zeigen
- Fig. 1: eine schematische Ansicht des Prüfstandes mit Brennkraftmaschine, Abgasanlage, Kompensator, Heißgasanlage und Elektropulser,
- Fig. 2: eine Ansicht im Schnitt auf ein Verbindungsrohr innerhalb des Zylinderkopfes des Motors und
- Fig. 3: eine Darstellung eines Kompensators im Schnitt.

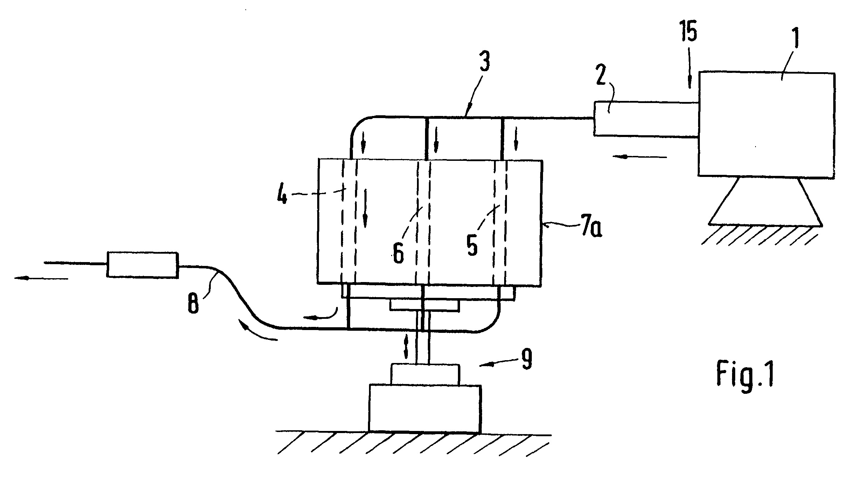

Der Prüfstand gemäß Figur 1 umfaßt im wesentlichen mindestens einen Heißgaserzeuger 1, der mit einem Kompensator 2 verbunden ist. Diese Prüfstandselemente 1 und 2 sind stationär angeordnet. An dem Kompensator 2 ist ein Saugverteiler 3 befestigt, der wiederum über Verbindungsrohre 4, 5 und 6 im Zylinderkopf 7a des Motors 7, mit der Abgasanlage 8 verbunden ist. Diese Teile 3 bis 8 sind mit einem Elektropulser 9 verbunden und über diesen in einen Schwingzustand zu versetzen.

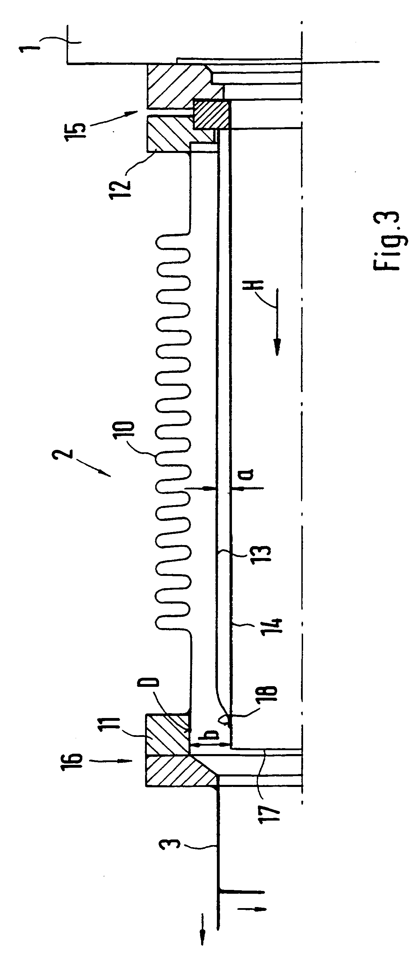

Der Saugverteiler 3 umfaßt entsprechend der Zylinderzahl des Motors 4 Abzweigrohre, welche mit Verbindungsrohren 4, 5 und 6 im Zylinderkopf 7a verbunden sind. Der zwischen dem Saugverteiler 3 und dem Heißgaserzeuger 1 angeordnete Kompensator 2 (Fig. 3) besteht aus einem äußeren Wellrohr 10, das mit Verbindungsflanschen 11, 12 versehen ist. Innerhalb des Wellrohres 10 sind zwei zueinander beabstandete innere Rohre 13, 14 angeordnet. Der Abstand a zwischen den Rohren 13, 14 bildet eine Wärmeisolierung. Diese Rohre 13 und 14 sind am Verbindungsende 15 mit dem Heißgaserzeuger 1 am Flansch 12 verbunden. Am gegenüberliegenden, mit dem Saugverteiler 3 verbundenen Ende 16 des Kompensators 2, sind die inneren Rohre 13, 14 freiliegend, d.h. das Ende 17 des Gasführungsrohres 14 ragt zwischen den Flansch 11 und auf diesem Ende 17 ist das weitere innere Rohr 13 mit einem Schiebesitz 18 aufliegend angeordnet.

Das Gasführungsrohr 14 sowie das umgebende weitere innere Rohr 13 sind mit Abstand b zum Innendurchmesser d des Verbindungsflansches 4 angeordnet.

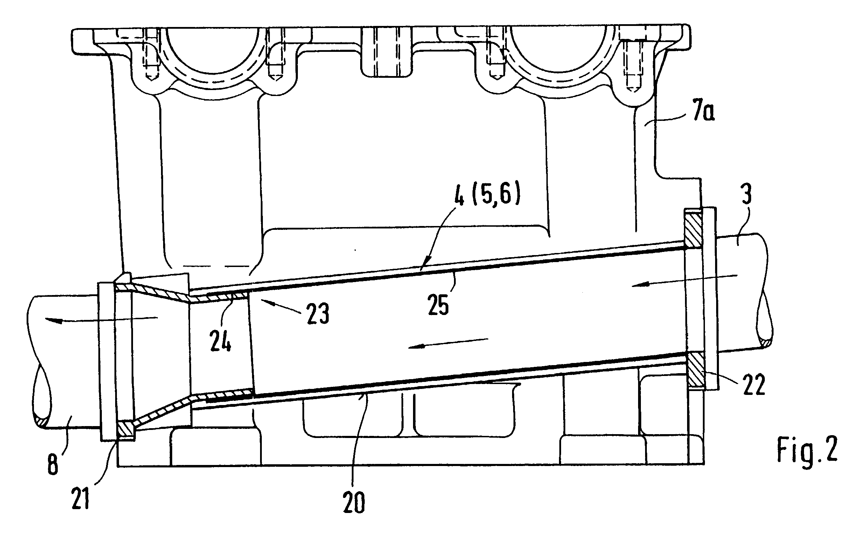

Die Verbindungsrohre 4, 5 und 6 sind jeweils in eingebrachte Bohrungen 20 des Zylinderkopfes 7a (Fig.2) des Motors 7 angeordnet und mittels endseitiger Flansche 21, 22 am Zylinderkopf 7a positioniert gelagert. Zum Ausgleich von Längenausdehnungen weist jedes Verbindungsrohr 4, 5, 6 einen Schiebesitz 23 auf, bei dem beispielsweise ein Rohrende 24 im Rohrteil 25 eingesteckt gehalten ist.

Durch den Prüfstand mit Elektropulser a werden Frequenzen von ca. 2Hz bis 2 kHz erzeugt, wodurch Schwingwege von weniger oder mehr als ± 12mm erreicht werden. Desweiteren werden über die Heißgasanlage 1 Temperaturen am Abgaskrümmer zwischen 300°C und 800°C gefahren. Mittels dieser Maßnahmen ist eine Überprüfung der Abgasanlage 8 hinsichtlich seiner Betriebsfestigkeit möglich, ohne daß ein Einsatz auf der Straße im Fahrzeug erforderlich wird.

## Patentansprüche

1. Prüfstand für Abgasanlagen einer Brennkraftmaschine, insbesondere zur Überprüfung der Betriebsfestigkeit bei Betriebstemperatur, bei der die Abgasanlage mit einem Verbrennungsmotor verbunden ist, **dadurch gekennzeichnet, daß** die Abgasanlage (8) über den Zylinderkopf (7a) des Motors (7) durchdringende Verbindungsrohre (4, 5, 6) mit einem Saugverteiler (3) verbunden ist, der unter Zwischenschaltung eines Kompensators (2) an eine Heißgasanlage (1) angeschlossen ist.

2. Prüfstand nach Anspruch 1, **dadurch gekennzeichnet, daß** die gesamte Einheit, bestehend aus der Abgasanlage (8) mit Zylinderkopf (7a) über einen Elektropulser (9) bei Betrieb der Heißgasanlage (1) in Schwingungen versetzbar ist.

3. Prüfstand nach den Ansprüchen 1 oder 2, **dadurch gekennzeichnet, daß** die Verbindungsrohre (4, 5, 6) in Querbohrungen (20) des Zylinderkopfes (7a) angeordnet und beabstandet zu diesen sind und endseitig der Bohrungen (20) jeweils eine Aufnahme für einen Rohrflansch (21, 22) zur Verbindung einerseits mit den einzelnen Rohren des Saugverteilers (3) und andererseits mit den einzelnen Rohren der Abgasanlage (8) vorgesehen ist.

4. Prüfstand nach den Ansprüchen 1, 2 oder 3, **dadurch gekennzeichnet, daß** mindestens an einem Ende des Verbindungsrohres (4, 5, 6) eine Schiebesitzverbindung (23) für einen Längenausgleich vorgesehen ist, die aus ineinandergesteckten Rohrenden (24, 25) besteht.

5. Prüfstand nach einem oder mehreren der vorhergehenden Ansprüche, **dadurch gekennzeichnet, daß** der Kompensator (2) ein äußeres mit Verbindungsflanschen (11, 12) verbundenes Wellrohr (10) umfaßt, mit denen zwei parallel zueinander, innenliegende und über einen Luftspalt (a) getrennte weitere Rohre (13, 14) angeordnet sind, wobei das eine innere Rohr ein Gasführungsrohr (14) bildet, das den Heißgasstrom (H) über die Verbindungsrohre (4, 5, 6) in die Abgasanlage (8) führt.

6. Prüfstand nach Anspruch 4, **dadurch gekennzeichnet, daß** das zwischen dem Wellrohr (10) und dem Gasführungsrohr (14) angeordnete Rohr (13) endseitig - in bezug auf den Gasstrom (H) - mit einem Schiebesitz (18) auf dem Gasführungsrohr (14) angeordnet ist.

7. Prüfstand nach den Ansprüchen 4 oder 5, **dadurch gekennzeichnet, daß** das Gasführungsrohr (14) und das weitere innere Rohr (13) zum Wellrohr (10) hin einen Abstand (b) zur freien Schwingbewegung der Rohre (13, 14) zum Flansch (11) bzw. zum Wellrohr (10) aufweist.

## Claims

1. A test bench for exhaust systems of an internal-combustion engine, especially for testing the serviceability at operating temperature, wherein the exhaust system is connected to a combustion engine, **characterised in that** the exhaust system (8) is connected to a suction distributor (3) via connecting pipes (4, 5, 6) extending through the cylinder head (7a) of the engine (7), which suction distributor (3) is connected to a hot-gas installation (1) with the interposition of a compensator (2).

2. A test bench according to claim 1, **characterised in that** the entire unit, comprising the exhaust system (8) with the cylinder head (7a), can be set into vibration by an electropulser (9) during operation of the hot-gas installation (1).

3. A test bench according to claim 1 or claim 2, **characterised in that** the connecting pipes (4, 5, 6) are arranged in transverse bores (20) in the cylinder head (7a) and are spaced from said transverse bores (20), and a respective seat for a pipe flange (21, 22) for connection to the individual pipes of the suction distributor (3) on the one hand and to the individual pipes of the exhaust system (8) on the other hand is provided at the ends of the bores (20).

4. A test bench according to claim 1, 2 or 3, **characterised in that** a sliding-fit connection (23) for longitudinal adjustment is provided at at least one end of the connecting pipe (4, 5, 6) and comprises pipe ends (24, 25) which are fitted into one another.

5. A test bench according to one or more of the preceding claims, **characterised in that** the compensator (2) comprises an outer corrugated pipe (10) which is connected to connecting flanges (11, 12), by means of which two further, inner pipes (13, 14) separated by an air gap (a) are arranged parallel to one another, wherein the one inner pipe forms a gas feed pipe (14) which conducts the hot-gas flow (H) into the exhaust system (8) via the connecting pipes (4, 5, 6).

6. A test bench according to claim 4, **characterised in that**, in relation to the gas flow (H), the end of the pipe (13), which is arranged between the corrugated pipe (10) and the gas feed pipe (14), is arranged on the gas feed pipe (14) by means of a sliding fit (18).

7. A test bench according to claim 4 or claim 5, **characterised in that** the gas feed pipe (14) and the further inner pipe (13) are spaced apart from the corrugated pipe (10) by an amount (b) for the free vibrational movement of the pipes (13, 14) in relation to the flange (11) or the corrugated pipe (10).

## Revendications

1. Banc d'essai pour des systèmes d'échappement des gaz d'un moteur à combustion interne, en particulier pour le contrôle de la résistance fonctionnelle à la température de service, température dans lequel le système d'échappement des gaz est relié à un moteur à combustion interne, **caractérisé en ce que** le système d'échappement des gaz (8) est relié, au moyen de tubes de raccordement (4, 5, 6) traversant la culasse (7a) du moteur (7), à un collecteur d'aspiration (3) qui est raccordé à un dispositif de gaz chauds (1) par l'intermédiaire d'un compensateur (2) intercalé.

2. Banc d'essai selon la revendication 1, **caractérisé en ce que** l'unité complète, formée par le système d'échappement des gaz (8) et la culasse (7a), peut être mise en vibrations au moyen d'un pulseur électrique (9) en cours de service du dispositif de gaz chauds (1).

3. Banc d'essai selon l'une quelconque des revendications 1 ou 2, **caractérisé en ce que** les tubes de raccordement (4, 5, 6) sont disposés dans des forures (20) transversales de la culasse (7a) et sont espacés de celles-ci, et du côté extrémité des forures (20) est prévu respectivement un logement pour une bride tubulaire (21, 22) pour le raccordement, d'une part, aux différents tubes du collecteur d'aspiration (3) et, d'autre part, aux différents tubes du système d'échappement des gaz (8).

4. Banc d'essai selon l'une quelconque des revendications 1, 2 ou 3, **caractérisé en ce qu'**il est prévu, à au moins une extrémité des tubes de raccordement (4, 5, 6), une portée coulissante (23) pour une compensation des longueurs, laquelle est formée par des extrémités de tube (24, 25) enfichées l'une dans l'autre.

5. Banc d'essai selon une ou plusieurs des revendications précédentes, **caractérisé en ce que** le compensateur (2) comporte un tube ondulé (10) extérieur raccordé à des brides de raccordement (11, 12) contre lesquelles sont montés deux tubes (13, 14) intérieurs, parallèles entre eux et séparés par un espace d'air (a), l'un des tubes intérieurs formant un tube d'acheminement des gaz (14) qui achemine le flux de gaz chauds (H) via les tubes de raccordement (4, 5, 6) dans le système d'échappement des gaz (8).

6. Banc d'essai selon la revendication 4, **caractérisé en ce que** le tube (13), disposé entre le tube ondulé (10) et le tube d'acheminement des gaz (14), est agencé sur le tube d'acheminement des gaz (14) avec une portée coulissante (18) du côté extrémité par rapport au flux de gaz (H).

7. Banc d'essai selon l'une quelconque des revendications 4 ou 5, **caractérisé en ce que** le tube d'acheminement des gaz (14) et l'autre tube intérieur (13) sont disposés à une distance (b) du tube ondulé (10), permettant le libre mouvement oscillant des tubes (13, 14) par rapport à la bride (11) ou par rapport au tube ondulé (10).
